# EUROPEAN PATENT APPLICATION

(11) **EP 4 148 819 A1**
(43) Date of publication of application: **15.03.2023**
(21) Application number: 21800204.6
(22) Date of filing: 29.04.2021
(51) Int. Cl.: H01M 4/131

(54) **POSITIVE ELECTRODE PLATE, PREPARATION METHOD THEREFOR, AND LITHIUM ION BATTERY COMPRISING SAME**

(30) Priority: 08.05.2020 CN 202010383203
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); HE, Wei, Zhuhai, Guangdong 519180 (CN); SHI, Chao, Zhuhai, Guangdong 519180 (CN); LI, Junyi, Zhuhai, Guangdong 519180 (CN); XU, Yanming, Zhuhai, Guangdong 519180 (CN)
(74) Representative: Radkov, Stoyan Atanassov
(86) International application number: PCT/CN2021/091034
(87) International publication number: WO 2021/223655

(57) **Abstract**

The present application provides a positive electrode sheet, a preparation method thereof, and a lithium-ion battery including the positive electrode sheet. The positive electrode sheet includes a positive electrode current collector, and the positive electrode current collector includes a single-sided coated area and a double-sided coated area. In the single-sided coated area, a first coating layer is disposed on a first surface of the positive electrode current collector, the first coating layer includes a first positive electrode active material layer and a second positive electrode active material layer, the second positive electrode active material layer is disposed on the surface of the positive electrode current collector, and the first positive electrode active material layer is disposed on a surface of the second positive electrode active material layer, and a particle size of the first positive electrode active material is larger than a particle size of the second positive electrode active material. The lithium-ion battery including the positive electrode sheet has the following effects: it can effectively improve the problem of lithium precipitation in the single-sided coated area of a negative electrode of the lithium-ion battery having a conventional spirally wound structure, thereby improving the cycle life of the lithium-ion battery, and reducing the cycle expansion of the lithium-ion battery. The compaction of a positive electrode is improved, and the energy density of a battery cell is increased without reducing the rapid charging performance of the battery.

## Description

### TECHNICAL FIELD

The present application belongs to the technical field of lithium-ion battery and, in particular, relates to a positive electrode sheet, a preparation method thereof, and a lithium-ion battery including the positive electrode sheet.

### BACKGROUND

With the rapid development of modem society, the applications of portable electronic devices (mobile phones, computers, etc.) are increasingly wide. Lithium-ion battery is widely used in portable mobile electronic device terminals, because it has long cycle life and high power density. However, as the tempo of people's lives becomes faster, people have higher requirements for its life and charging speed. Currently it appears that rapid charging lithium-ion battery has become a main development trend of consumer lithium-ion battery. The development of rapid charging lithium-ion battery technology brings convenience to people, but further brings safety problems. When the lithium-ion battery is in a long cycle under a high-rate rapid charging condition, it is very easy to cause lithium precipitation of a negative electrode of the lithium-ion battery, especially a single-sided coated area of the negative electrode is more serious, thereby bringing problems of the lithium-ion battery such as cycle diving, expansion, swelling, etc., which greatly reduces the working life of the lithium-ion battery.

### SUMMARY

To improve the shortcomings in the prior art, the present application provides a positive electrode sheet, a preparation method thereof, and a lithium-ion battery including the positive electrode sheet. The positive electrode sheet is mainly used to solve the problem of lithium precipitation in a single-sided coated area of a negative electrode of a battery cell having a spirally wound structure in a long cycle process under a high-rate rapid charging system.

The inventors of the present application have studied and found that the root cause of lithium precipitation in the single-sided coated area of the negative electrode of the existing battery cell having the spirally wound structure is that the single-sided coated area is close to a tab, resulting in great current density, low potential, and inadequate dynamic performance of the negative electrode. The key to solve the problem of lithium precipitation in the single-sided coated area of the negative electrode under the premise of keeping the charging system unchanged is to improve the dynamic performance of the negative electrode and/or reduce the dynamic performance of a positive electrode. However, the improvement of the dynamic performance of the entire negative electrode will inevitably lead to a decrease in energy density of the lithium-ion battery, and the reduction of the dynamic performance of the entire positive electrode will further inevitably lead to a decrease of the rapid charging ability of the lithium-ion battery. The present application provides a positive electrode sheet with a specific structure, the positive electrode sheet, by reducing the dynamic performance of a positive electrode active material layer of a spirally wound lithium-ion battery, realizes the reduction of polarization of the single-sided coated area of the negative electrode and the entire surface of the negative electrode and effectively improves the problem of lithium precipitation in the single-sided coated area of the negative electrode of the lithium-ion battery having a conventional spirally wound structure in the condition of not reducing the overall rapid charging performance of the lithium-ion battery and the energy density of the lithium-ion battery, and improves the cycle life of the lithium-ion battery and improves the cycle expansion in the condition of not reducing the overall rapid charging performance of the lithium-ion battery and the energy density of the lithium-ion battery. The positive electrode sheet may solve the problem of lithium precipitation in the single-sided coated area of the negative electrode of the battery cell having the spirally wound structure in the long cycle process under the high-rate charging system, in a case of not reducing the overall rapid charging performance of the lithium-ion battery and the energy density of the lithium-ion battery.

An objective of the present application is realized by the following technical solutions:
a spirally wound positive electrode sheet, specifically a spirally wound positive electrode sheet for a lithium-ion battery, the positive electrode sheet includes a positive electrode current collector, and the positive electrode current collector includes a single-sided coated area and a double-sided coated area;
in the single-sided coated area, a first coating layer is disposed on a first surface of one side of the positive electrode current collector, the first coating layer includes a first positive electrode active material layer and a second positive electrode active material layer, the second positive electrode active material layer is disposed on the first surface of the positive electrode current collector, and the first positive electrode active material layer is disposed on a surface of the second positive electrode active material layer;
in the double-sided coated area, a second coating layer and a third coating layer are disposed on the first surface of the positive electrode current collector, and the first coating layer, the second coating layer, and the third coating layer are sequentially connected; a fourth coating layer is disposed on a second surface of the other side of the positive electrode current collector;
the second coating layer includes the first positive electrode active material layer and the second positive electrode active material layer, the second positive electrode active material layer is disposed on the first surface of the positive electrode current collector, and the first positive electrode active material layer is disposed on the surface of the second positive electrode active material layer;
the third coating layer includes the first positive electrode active material layer, and the first positive electrode active material layer is disposed on the first surface of the positive electrode current collector;
the fourth coating layer includes the first positive electrode active material layer and the second positive electrode active material layer, the second positive electrode active material layer is disposed on the second surface of the positive electrode current collector, and the first positive electrode active material layer is disposed on the surface of the second positive electrode active material layer;
the first positive electrode active material layer includes a first positive electrode active material, the second positive electrode active material layer includes a second positive electrode active material, and a particle size of the first positive electrode active material is larger than a particle size of the second positive electrode active material.

According to the present application, the particle size of the first positive electrode active material is larger than the particle size of the second positive electrode active material. The shorter the diffusion path of lithium ions in the positive electrode active material, the better the dynamic performance, so that such selection may ensure that the dynamic performance of the second positive electrode active material layer is superior to the dynamic performance of the first positive electrode active material layer.

According to this application, a lithium-ion extraction rate of the second positive electrode active material is greater than a lithium-ion extraction rate of the first positive electrode active material.

In the present application, the dynamic performance of the second positive electrode active material layer is better than the dynamic performance of the first positive electrode active material layer.

According to the present application, the dynamic performance refers to the de-intercalation rate of the lithium-ion, and the faster the de-intercalation rate is, the better the dynamic performance. The factors that affect the de-intercalation rate of the lithium-ion include at least the following two: (1) a charging current supportable by an active material, the greater the supportable charging current, the better the dynamic performance; (2) the amount of lithium-ions extracted per unit time, that is, the lithium-ion extraction rate, the faster the lithium-ion extraction rate is, the better the dynamic performance.

Exemplarily, the de-intercalation rate of the lithium-ion in the second positive electrode active material layer is greater than the de-intercalation rate of the lithium-ion in the first positive electrode active material layer.

Exemplarily, the supportable charging current in the second positive electrode active material layer is greater than the supportable charging current in the first positive electrode active material layer.

Exemplarily, the lithium-ion extraction rate in the second positive electrode active material layer is greater than the lithium-ion extraction rate in the first positive electrode active material layer.

In the present application, when the first positive electrode active material layer having a relatively poor dynamic performance is introduced into the positive electrode sheet having a good dynamic performance, it results in a slower de-intercalation rate of the lithium-ion since the dynamic performance of the positive electrode sheet is deteriorated. That is, the amount of lithium-ions collected or accepted on the surface of the negative electrode per unit time is reduced, therefore, the problem of lithium precipitation on the surface of the negative electrode, especially in the single-sided coated area portion, may be greatly reduced.

According to the present application, the first positive electrode active material forming the first positive electrode active material layer has a particle size distribution of 5 µm<D₁₀<8 µm, 16 µm<D₅₀<19 µm, 35 µm<D₉₀<45 µm; the second positive electrode active material forming the second positive electrode active material layer has a particle size distribution of 4 µm<D₁₀<6 µm, 13 µm<D₃₀<16 µm, 22 µm<D₉₀<33 µm.

According to the present application, the positive electrode current collector further includes a tab area, that is, the positive electrode current collector includes the single-sided coated area, the double-sided coated area, and the tab area that are sequentially disposed. In the tab area, there is no coating layer disposed on the surfaces of two sides of the positive electrode current collector.

According to the present application, the single-sided coated area, the double-sided coated area, and the tab area are disposed to be sequentially connected, that is, there is no uncoated area in the single-sided coated area, the double-sided coated area, and the tab area.

According to the present application, the first coating layer in the single-sided coated area, and the second coating layer and the third coating layer in the double-sided coated area are disposed to be sequentially connected, that is, there is no uncoated area in the first coating layer in the single-sided coated area, and the second coating layer and the third coating layer in the double-sided coated area.

In the present application, the single-sided coated area refers to coating the positive electrode active material layer on a surface of one of the two sides of the current collector. The double-sided coated area refers to coating the positive electrode active material layer on surfaces of two sides of the current collector.

According to the present application, the length and width of the current collector are not specifically defined, and current collectors of different lengths and widths are selected according to different battery cells required. Exemplarily, for a battery of type 386283, the length of the current collector is 500-1000 mm, for example, 885±2 mm, and the width of the current collector is 400-900 mm, for example, 773±2 mm.

According to the present application, the length of the tab area, the length of the single-sided coated area, and the length of the double-sided coated area are not specifically defined, and may be set according to different requirements. For example, the length of the double-sided coated area is greater than the length of the single-sided coated area, and the length of the double-sided coated area is greater than the length of the tab area. For another example, for a battery of type 386283, the length of the single-sided coated area is 123±2 mm.

According to the present application, the length of the first coating layer and the length of the third coating layer are not specifically defined. For example, the length of the first coating layer is 8-10 mm longer than the length of the third coating layer. For another example, the length of the third coating layer is same as or is 1-2 mm shorter than the length of the single-sided coated area in a negative electrode sheet.

According to the present application, a positive electrode tab is disposed in the tab area, so there is no need to dispose a coating layer in this area.

According to the present application, the distance between the positive electrode tab disposed in the tab area and the double-sided coated area is not specifically limited, for example, 10-100 mm; for another example, for a battery of type 386283, the distance between the positive electrode tab disposed in the tab area and the double-sided coated area is 35.5±0.5 mm.

According to the present application, in the single-sided coated area, the thickness of the first positive electrode active material layer in the first coating layer is 5-15 µm, for example, 5 µm, 10 µm, or 15 µm; the thickness of the second positive electrode active material layer in the first coating layer is 55-75 µm, for example, 55 µm, 60 µm, 65 µm, 70 µm, or 75 µm; and the sum of the thickness of the first positive electrode active material layer and the thickness of the second positive electrode active material layer is 60-80 µm.

According to the present application, in the double-sided coated area, the thickness of the first positive electrode active material layer in the second coating layer is 5-15 µm, for example, 5 µm, 10 µm, or 15 µm; the thickness of the second positive electrode active material layer in the second coating layer is 55-75 µm, for example, 55 µm, 60 µm, 65 µm, 70 µm, or 75 µm; and the sum of the thickness of the first positive electrode active material layer and the thickness of the second positive electrode active material layer is 60-80 µm.

According to the present application, in the double-sided coated area, the thickness of the first positive electrode active material layer in the third coating layer is 60-80 µm, for example, 60 µm, 65 µm, 70 µm, 75 µm, or 80 µm.

According to the present application, in the double-sided coated area, the thickness of the first positive electrode active material layer in the fourth coating layer is 5-15 µm, for example, 5 µm, 10 µm, or 15 µm; the thickness of the second positive electrode active material layer in the fourth coating layer is 55-75 µm, for example, 55 µm, 60 µm, 65 µm, 70 µm, or 75 µm; and the sum of the thickness of the first positive electrode active material layer and the thickness of the second positive electrode active material layer is 60-80 µm.

According to the present application, in the double-sided coating area, the thickness of the second coating layer, the thickness of the third coating layer, and the thickness of the fourth coating layer are the same.

According to the present application, in the positive electrode sheet, the thickness of the first coating layer, the thickness of the second coating layer, the thickness of the third coating layer, and the thickness of the fourth coating layer are the same.

According to the present application, the positive electrode current collector further includes an uncoated area, the single-sided coated area has one side connected to the double-sided coated area, and has the other side connected to the uncoated area, and the uncoated area, for example, is produced by cutting in the production process of the positive electrode sheet, which is used to wrap the surface of the spirally wound battery cell, and the length of the uncoated area, for example, may be 35±2 mm.

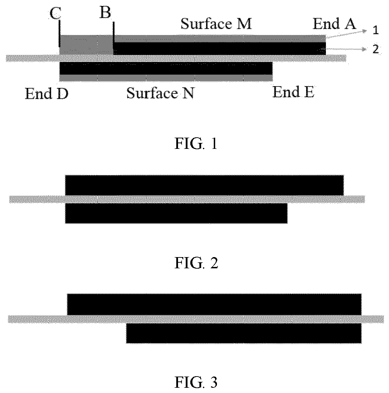

According to the present application, as shown in FIG. 1, from one end of the positive electrode current collector and along the length direction of the positive electrode current collector, the positive electrode current collector included the uncoated area, the single-sided coated area, the double-sided coated area, and the tab area that are sequentially disposed;
the first coating layer including the first positive electrode active material layer and the second positive electrode active material layer, the second coating layer including the first positive electrode active material layer and the second positive electrode active material layer, and the third coating layer including the first positive electrode active material layer are sequentially coated on a surface (surface M) of one side of the positive electrode current collector; where in the first coating layer and the second coating layer, the second positive electrode active material layer is coated on the surface of the positive electrode current collector, and the first positive electrode active material layer is coated on a surface of the second positive electrode active material layer; in the third coating layer, the first positive electrode active material layer is coated on the surface of the positive electrode current collector;
the fourth coating layer including the first positive electrode active material layer and the second positive electrode active material layer is coated on a surface (surface N) of the other side of the positive electrode current collector, and the second positive electrode active material layer is coated on the surface of the positive electrode current collector, the first positive electrode active material layer is coated on a surface of the second positive electrode active material layer; and the length of the fourth coating layer is equal to the sum of the lengths of the second coating layer and the third coating layer to ensure that the single-sided coated area (an area formed by the first coating layer) and the double-sided coated area (an area formed by the second coating layer, the third coating layer, and the fourth coating layer) are formed in the positive electrode sheet.

In a preparation process of the positive electrode sheet having the above structure, the preparation of the surface M may be, for example, that a slurry for forming the first positive electrode active material layer and a slurry for forming the second positive electrode active material layer are coated together from a point A of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at a point B, the slurry for forming the first positive electrode active material layer continues to be coated to a point C. The thicknesses of the first coating layer (between A and E) in the single-sided coated area, the second coating layer (between E and B) and the third coating layer (between B and C) in the double-sided coated area are ensured to be the same.

In a preparation process of the positive electrode sheet having the above structure, the preparation of the surface N may be, for example, that the slurry for forming the first positive electrode active material layer and the slurry for forming the second positive electrode active material layer are coated together from a point E of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at a point D, or, the slurry for forming the first positive electrode active material layer and the slurry for forming the second positive electrode active material layer are coated together from the point D of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point E. The line connecting the point C and the point D is perpendicular to the positive electrode current collector. In the actual preparation process, there is a mismatch about 0-1 mm between the point C and the point D, and the distance between A and C is greater than the distance between D and E to ensure that the single-sided coated area and the double-sided coated area may be formed in the positive electrode sheet.

After the preparation of the positive electrode sheet with the above structure is completed, the positive electrode current collector is cut, where one side of the single-sided coated area is connected to the double-sided coated area, the uncoated area is left on the other side of the single-sided coated area.

According to the present application, the first positive electrode active material layer includes a first positive electrode active material, a first conductive agent and a first binder, and the second positive electrode active material layer includes a second positive electrode active material, a second conductive agent and a second binder. The first positive electrode active material and the second positive electrode active material for forming the first positive electrode active material layer and the second positive electrode active material layer are the same or different, the first conductive agent and the second conductive agent are the same or different, and the first binder and the second binder are the same or different.

According to the present application, the mass percentages of the components each in the first positive electrode active material layer are:
70-99 wt% of the first positive electrode active material, 0.5-15 wt% of the first conductive agent, and 0.5-15 wt% of the first binder; where the first positive electrode active material has a particle size distribution of 5 µm<D₁₀<8 µm, 16 µm<D₅₀<19 µm, 35 µm<D₉₀<45 µm.

Preferably, the mass percentages of the components each in the first positive electrode active material layer are:
80-98 wt% of the first positive electrode active material, 1-10 wt% of the first conductive agent, and 1-10 wt% of the first binder.

According to the present application, the mass percentages of the components each in the second positive electrode active material layer are:
70-99 wt% of the second positive electrode active material, 0.5-15 wt% of the second conductive agent, and 0.5-15 wt% of the second binder; where the second positive electrode active material has a particle size distribution of 4 µm<D₁₀<6 µm, 13 µm<D₃₀<16 µm, 22 µm<D₉₀<33 µm.

Preferably, the mass percentages of the components each in the second positive electrode active material layer are:
80-98 wt% of the second positive electrode active material, 1-10 wt% of the second conductive agent, and 1-10 wt% of the second binder.

Where, the first conductive agent and the second conductive agent are the same or different, and are independently selected from at least one of conductive carbon black, acetylene black, Ketjen black, conductive graphite, conductive carbon fiber, carbon nanotube, metal powder, carbon fiber.

Where, the first binder and the second binder are the same or different, and are independently selected from at least one of polyvinylidene fluoride (PVDF), polytetrafluoroethylene (PTFE), lithium polyacrylate (PAALi).

Where, the first positive electrode active material and the second positive electrode active material are the same or different, and are independently selected from at least one of lithium cobaltate, lithium nickel cobalt manganate, lithium manganate, lithium nickel manganate, lithium nickel cobalt aluminate, lithium iron phosphate or lithium-rich manganese. Preferably, the first positive electrode active material has a particle size distribution of 5 µm < D₁₀ < 8 µm, 16 µm < D₅₀ < 19 µm, 35 µm < D₉₀ <45 µm; the second positive electrode active material has a particle size distribution of 4 µm<D₁₀<6 µm, 13 µm<D₃₀<16µm, 22 µm<D₉₀<33 µm; and the particle size distribution of the first positive electrode active material is larger than the particle size distribution of the second positive electrode active material.

The present application further provides a preparation method for the positive electrode sheet described above, and the method includes the following steps:
1) preparing a slurry for forming a first positive electrode active material layer and a slurry for forming a second positive electrode active material layer respectively;
2) coating the slurry for forming the first positive electrode active material layer and the slurry for forming the second positive electrode active material layer on surfaces of two sides of a positive electrode current collector using a double layer coater to prepare the positive electrode sheet.

According to the present application, in step 1), the slurry for forming the first positive electrode active material layer and the slurry for forming the second positive electrode active material layer have a solid content of 70 wt% to 75 wt%.

According to the present application, in step 2), on a surface of one side of the positive electrode current collector, the slurry for forming the first positive electrode active material layer and the slurry for forming the second positive electrode active material layer are coated together from the point A of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point B, the slurry for forming the first positive electrode active material layer continues to be coated to the point C. The thicknesses of the first coating layer (between A and E) in the single-sided coated area, the second coating layer (between E and B) and the third coating layer (between B and C) in the double-sided coated area are ensured to be the same.

According to the present application, in step 2), on a surface of the other side of the positive electrode current collector, the slurry for forming the first positive electrode active material layer and the slurry for forming the second positive electrode active material layer are coated together from the point E of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point D, or, the slurry for forming the first positive electrode active material layer and the slurry for forming the second positive electrode active material layer are coated together from the point D of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point E. The line connecting the point C and the point D is perpendicular to the positive electrode current collector. In the actual preparation process, there is a mismatch about 0-1 mm between the point C and the point D, and the distance between A and C is greater than the distance between D and E to ensure that the single-sided coated area and the double-sided coated area may be formed in the positive electrode sheet.

The present application further provides a lithium-ion battery, and the battery includes the positive electrode sheet described above.

According to the present application, the battery further includes a negative electrode sheet and a separation film.

Beneficial effects of the present application:
The present application provides a positive electrode sheet, a preparation method thereof, and a lithium-ion battery including the positive electrode sheet. The lithium-ion battery including the positive electrode sheet has the following effects.
(1) The problem of lithium precipitation in the single-sided coated area of the negative electrode of the lithium-ion battery having a conventional spirally wound structure may be effectively improved, thereby improving the cycle life of the lithium-ion battery, and reducing the cycle expansion of the lithium-ion battery.
(2) The compaction density of the positive electrode is improved and the energy density of the battery cell is increased without reducing the rapid charging performance of the battery.

### BRIEF DESCRIPTION OF DRAWINGS

FIG. 1 is a positive electrode sheet structure according to a preferred solution of the present application, where 1 is a first positive electrode active material layer, and 2 is a second positive electrode active material layer.
FIG. 2 is a conventional positive electrode sheet structure.
FIG. 3 is a negative electrode sheet structure of the present application.

### DESCRIPTION OF EMBODIMENTS

As described above, the lithium-ion battery using the positive electrode sheet of the present application further includes the negative electrode sheet. The negative electrode sheet is a spirally wound negative electrode sheet, specifically a spirally wound positive electrode sheet for the lithium-ion battery. The negative electrode sheet includes a negative electrode current collector, and the negative electrode current collector includes a single-sided coated area and a double-sided coated area;
in the single-sided coated area, a first coating layer is disposed on a surface of one side of the negative electrode current collector, the first coating layer includes a negative electrode active material layer, and the negative electrode active material layer is disposed on the surface of the negative electrode current collector;
in the double-sided coated area, second coating layers are respectively disposed on surfaces of two sides of the negative electrode current collector, and the second coating layers each includes the negative electrode active material layer, and the negative electrode active material layer is disposed on the surfaces of the negative electrode current collector.

Specifically, the structure of the negative electrode sheet is shown in FIG. 3.

Where, the single-sided coated area and the double-sided coated area are disposed to be sequentially connected, that is, there is no uncoated area in the single-sided coated area and the double-sided coated area.

Where, the thickness of the first coating layer and the thickness of the second coating layer are the same, both being 95-120 µm.

Where, the negative electrode current collector further includes the uncoated area, the single-sided coated area has one side connected to the double-sided coated area, and has the other side connected to the uncoated area. The uncoated area, for example, is produced in order to avoid cutting the active material layer on the surface of the negative electrode current collector in the production process of the negative electrode sheet, and the length of the uncoated area, for example, may be 0.5-2 mm, such as 1 mm.

Where, the mass percentages of components each in the negative electrode active material layer are:
70-99 wt% of a negative active material, 0.5-15 wt% of a conductive agent, 0.5-15 wt% of a binder.

Preferably, the mass percentages of components each in the negative electrode active material layer are:
80-98 wt% of the negative active material, 1-10 wt% of the conductive agent, 1-10 wt% of the binder.

Where, the conductive agent is selected from at least one of conductive carbon black, acetylene black, Ketjen black, conductive graphite, conductive carbon fiber, carbon nanotube, metal powder, carbon fiber.

Where, the binder is selected from at least one of sodium carboxymethyl cellulose, styrene butadiene latex, polytetrafluoroethylene, polyethylene oxide.

Where, the negative active material is selected from at least one of artificial graphite, natural graphite, mesophase carbon microspheres, lithium titanate.

The present application provides a preparation method for the negative electrode sheet described above, and the method includes the following steps:
1) preparing a slurry for forming a negative electrode active material layer;
2) coating the slurry for forming the negative electrode active material layer on surfaces of two sides of a negative electrode current collector using a coater to prepare the negative electrode sheet.

Where, in step 1), the slurry for forming the negative electrode active material layer has a solid content of 40 wt% to 45 wt%.

The present application will be further described in detail below in combination with specific embodiments. It should be understood that the following embodiments are only exemplarily describe and explain the present application, and should not be explained as limiting the protection scope of the present application. All technologies implemented based on the above contents of the present application are covered by the scope of the present application to be protected.

The experimental methods used in the following embodiments are conventional methods unless otherwise specified. The reagents, materials, etc. used in the following embodiments, unless otherwise specified, may all be obtained from commercial sources.

In the description of the present application, it should be noted that the terms "first", "second", "third", "fourth", etc. are only used for descriptive purposes, and do not indicate or imply relative importance.

The positive electrode sheet prepared in the following embodiments is used for a battery of type 386283, where the distance between the positive electrode tab disposed in the tab area and the single-sided coated area is 35.5±0.5 mm, the length of the single-sided coated area is 113±2 mm, the length of the current collector is 885±2 mm, and the width of the current collector is 773±2 mm.

### Example 1

Step 1: preparing a slurry for forming a first positive electrode active material layer: a first positive electrode active material (lithium cobaltate), a first conductive agent (conductive carbon black) and a first binder (PVDF) are added into a stirring tank in accordance with a mass ratio of 97.2:1.5:1.3, and a N-Methylpyrrolidone (NMP) is added to prepare the slurry for forming the first positive electrode active material layer, and the positive electrode slurry has a solid content of 70 wt% to 75 wt%; where the first positive electrode active material has a particle size distribution of 5 µm<D₁₀<8 µm, 16 µm<D₅₀<19 µm, 35 µm<D₉₀<45 µm.
Step 2: preparing a slurry for forming a second positive electrode active material layer: the second positive electrode active material (lithium cobaltate), a second conductive agent (conductive carbon black) and a second binder (PVDF) are added into a stirring tank in accordance with a mass ratio of 97.2:1.5:1.3, and the NMP is added to prepare the slurry for forming the second positive electrode active material layer, and the positive electrode slurry has a solid content of 70 wt% to 75 wt%; where the second positive electrode active material has a particle size distribution of 4 µm<D₁₀<6 µm, 13 µm<D₃₀<16 µm, 22 µm<D₉₀<33 µm.
Step 3: coating the slurry for forming the first positive electrode active material layer and the slurry for forming the second positive electrode active material layer on a surface of the positive electrode current collector using a double layer coater. Specifically:
   as shown in FIG. 1, on a surface M of one side of the positive electrode current collector, the slurry for forming the first positive electrode active material layer and the slurry for forming the second positive electrode active material layer are coated together from a point A of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to cross a point E and end at a point B, the slurry for forming the first positive electrode active material layer is coated to cross the point E and the point B to a point C. Where between A and E is a single-sided coated area, and between E and C is a double-sided coated area, and the thicknesses of a first coating layer (between A and E) in the single-sided coated area, a second coating layer (between E and B) and a third coating layer (between B and C) in the double-sided coated area are ensured to be the same;
   on a surface N of the other side of the positive electrode current collector, the slurry for forming the first positive electrode active material layer and the slurry for forming the second positive electrode active material layer are coated together from the point E of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point D, or, the slurry for forming the first positive electrode active material layer and the slurry for forming the second positive electrode active material layer are coated together from the point D of the positive electrode current collector, and the slurry for forming the second positive electrode active material layer is close to the positive electrode current collector, and the slurry for forming the first positive electrode active material layer is away from the positive electrode current collector; the slurry for forming the second positive electrode active material layer is coated to end at the point E. The line connecting the point C and the point D is perpendicular to the positive electrode current collector. In the actual preparation process, there is a mismatch about 0-1 mm between the point C and the point D, and the distance between B and C is equal to the distance between A and E to ensure that a tab area, the single-sided coated area, and the double-sided coated area may be formed in the positive electrode sheet;
   the prepared positive electrode sheet is dried at a temperature of 120 °C.
Step 4: preparing a negative electrode sheet: using artificial graphite as a negative active material, then adding into a stirring tank together with a conductive agent (acetylene black) and a binder (sodium carboxymethyl cellulose) in accordance with a mass ratio of 97:1.5:1.5, adding deionized water for thorough stirring, and passing through a 200-mesh screen, to prepare a negative slurry where the negative slurry has a solid content of 40 wt% to 45 wt%, then coating the negative slurry on an aluminum foil using a coater, and drying at a temperature of 100 °C, to obtain the negative electrode sheet. In the obtained negative electrode sheet, from one end of the negative electrode current collector and along the length direction of the negative electrode current collector, the negative electrode current collector includes the tab area, the single-sided coated area, and the double-sided coated area that are sequentially disposed;
   in the tab area, there is no coating layer disposed on the surfaces of two sides of the negative electrode current collector; in the single-sided coated area, a first coating layer is disposed on the surface of one side of the negative electrode current collector, the first coating layer includes a negative electrode active material layer formed by the negative electrode slurry described above, and the negative electrode active material layer is disposed on the surfaces of two sides of the negative electrode current collector; in the double-sided coated area, second coating layers are respectively disposed on two side surfaces of the negative electrode current collector, and the second coating layer includes the negative electrode active material layer formed by the negative electrode slurry described above, and the negative electrode active material layer is disposed on the surfaces of the negative electrode current collector.
Step 5: assembling a battery cell: spirally winding the positive electrode sheet prepared in the first to third steps, the negative electrode sheet prepared in the fourth step described above, and a separation film together to form a wound core, packaging with an aluminum plastic film, roasting to remove moisture, and then injecting an electrolytic solution, and subjecting to a hot-pressing forming process to obtain the battery cell.

### Examples 2-3 and Comparative Examples 1-2

Other operation steps are the same as the Example 1, and the difference only lies in that the thicknesses of the first positive electrode active material layer and the second positive electrode active material layer in the single-sided coated area and the double-sided coated area are different, as shown in Table 1.

**Table 1 Structure parameters of the positive electrode sheets of Examples 1-3 and Comparative Examples 1-2**

| | Double-sided coated area | | | Single-sided coated area |
|---|---|---|---|---|
| | Thickness of the second coating layer | Thickness of the third coating layer | Thickness of the fourth coating layer | Thickness of the first coating layer |
| Example 1 | 5µm/75µm | 80µm/0µm | 5µm/75µm | 5µm/75µm |
| Example 2 | 10µm/70µm | 80µm/0µm | 10µm/70µm | 10µm/70µm |
| Example 3 | 15µm/65µm | 80µm/0µm | 15µm/65µm | 15µm/65µm |
| Comparative Example 1 | 80µm/0µm | 80µm/0µm | 80µm/0µm | 80µm/0µm |
| Comparative Example 2 | 0µm/80µm | 0µm/80µm | 0µm/80µm | 0µm/80µm |

In Table 1, the thickness before "/" represents the thickness of the first positive electrode active material layer, and the thickness after "/" represents the thickness of the second positive electrode active material layer; taking 5 µm/75 µm as an example, the thickness of the first positive electrode active material layer in the second coating layer is 5 µm, and the thickness of the second positive electrode active material layer in the second coating layer is 75 µm.

The positive electrode sheets prepared in each of Examples are subjected to the same compaction, and are assembled into soft-packed battery cells of type 386283. The energy density of each soft-packed battery cell is tested by 0.2 C/0.2 C charging and discharging at 25 °C, and the each prepared soft-packed battery cell is subjected to 2.5 C charging /0.7 C discharging at 25 °C. A respective battery is disassembled under different cycle times to confirm the status of lithium precipitation in the single-sided coated area of a negative electrode and the surface of the negative electrode of the battery. The disassembling results, energy density, and charging speed are shown in Table 2 below.

**Table 2 Energy density and the status of lithium precipitation on the surface of the negative electrode during the cycle, the capacity retention rate and the expansion data of the battery in each of Examples**

| Item | Energy density Wh/L | 80% SOC/m in | lithium precipitation | | | | | | capacity retention rate/% for 1000T | expansio n/% for 1000T |
|---|---|---|---|---|---|---|---|---|---|---|
| | | | single-sided coated area for 300T | single-sided coated area for 500T | single-side d coated area for 1000T | surface of negative electrode for 300T | surface of negative electrode for 500T | surface of negative electrode for 1000T | | |
| Examp le1 | 703 | 252 | No lithium precipitatio n | No lithium precipitation | No lithium precipitatio n | No lithium precipitatio n | No lithium precipitatio n | Slight lithium precipitatio n | 83.01 | 10.05 |
| Examp le2 | 701 | 25.5 | No lithium precipitatio n | No lithium precipitation | No lithium precipitatio n | No lithium precipitatio n | No lithium precipitatio n | No lithium precipitatio n | 84.32 | 9.73 |
| Examp le3 | 695 | 26.3 | No lithium precipitatio n | No lithium precipitation | No lithium precipitatio n | No lithium precipitatio n | No lithium precipitatio n | No lithium precipitatio n | 85.09 | 9.32 |
| Compa rative Examp le1 | 710 | 33 | No lithium precipitatio n | No lithium precipitation | No lithium precipitatio n | No lithium precipitatio n | No lithium precipitatio n | No lithium precipitatio n | 86.29 | 9.15 |
| Compa rative Examp le2 | 650 | 25 | Slight lithium precipitatio n | lithium precipitation | Severe lithium precipitatio n | No lithium precipitatio n | Slight lithium precipitatio n | lithium precipitatio n | 81.03 | 11.75 |

In Table 2, there is slight lithium precipitation in the single-sided coated area: the lithium precipitation area of the single-sided coated area is less than 10% of the total area of the single-sided coated area; there is lithium precipitation in the single-sided coated area: the lithium precipitation area of the single-sided coated area is 10% to 30% of the total area of the single-sided coated area; there is serious lithium precipitation in the single-sided coated area: the lithium precipitation area of the single-sided coated area is greater than 50% of the total area of the single-sided coated area;

There is slight lithium precipitation in the surface of the negative electrode: the lithium precipitation area is within 10% of the surface area of the entire negative electrode; there is lithium precipitation in the surface of the negative electrode: the lithium precipitation area is 10% to 30% of the surface area of the entire negative electrode; there is serious lithium precipitation in the surface of the negative electrode: the lithium precipitation area is no less than 50% of the surface area of the entire negative electrode.

It may be seen from Table 2 that the battery cell prepared by the method in the present application effectively improves the problem of lithium precipitation on the single layer of the negative electrode of the lithium-ion battery having a conventional spirally wound structure, improves the cycle life of the lithium-ion battery, improves the cycle expansion, and at the same time improves the fast charging performance of the battery, in the condition of not reducing the energy density of the battery. Although the simple use of the negative electrode active material with a superior dynamic performance and smaller particle size can effectively improve the problem of lithium precipitation in the single-sided coated area of the negative electrode in a long cycle process, the energy density of the lithium-ion battery is greatly reduced.

The embodiments of the present application are described above. However, the present application is not limited to the above embodiments. Any modification, equivalent replacement, improvement, etc. made within the spirit and principle of the present application should be included in the protection scope of the present application.

## Claims

1. A spirally wound positive electrode sheet, wherein the positive electrode sheet comprises a positive electrode current collector, and the positive electrode current collector comprises a single-sided coated area and a double-sided coated area;
in the single-sided coated area, a first coating layer is disposed on a first surface of one side of the positive electrode current collector, the first coating layer comprises a first positive electrode active material layer and a second positive electrode active material layer, the second positive electrode active material layer is disposed on the first surface of the positive electrode current collector, and the first positive electrode active material layer is disposed on a surface of the second positive electrode active material layer;
in the double-sided coated area, a second coating layer and a third coating layer are disposed on the first surface of the positive electrode current collector, and the first coating layer, the second coating layer, and the third coating layer are sequentially connected; a fourth coating layer is disposed on a second surface of the other side of the positive electrode current collector;
the second coating layer comprises the first positive electrode active material layer and the second positive electrode active material layer, the second positive electrode active material layer is disposed on the first surface of the positive electrode current collector, and the first positive electrode active material layer is disposed on the surface of the second positive electrode active material layer;
the third coating layer comprises the first positive electrode active material layer, and the first positive electrode active material layer is disposed on the first surface of the positive electrode current collector;
the fourth coating layer comprises the first positive electrode active material layer and the second positive electrode active material layer, the second positive electrode active material layer is disposed on the second surface of the positive electrode current collector, and the first positive electrode active material layer is disposed on the surface of the second positive electrode active material layer;
the first positive electrode active material layer comprises a first positive electrode active material, the second positive electrode active material layer comprises a second positive electrode active material, and a particle size of the first positive electrode active material is larger than a particle size of the second positive electrode active material.

2. The positive electrode sheet according to claim 1, wherein a lithium-ion extraction rate of the second positive electrode active material is greater than a lithium-ion extraction rate of the first positive electrode active material.

3. The positive electrode sheet according to claim 1 or 2, wherein the first positive electrode active material forming the first positive electrode active material layer has a particle size distribution of 5 µm<D₁₀<8 µm, 16 µm<D₅₀<19 µm, 35 µm<D₉₀<45 µm; the second positive electrode active material forming the second positive electrode active material layer has a particle size distribution of 4 µm<D₁₀<6 µm, 13 µm<D₅₀<16 µm, 22 µm<D₉₀<33 µm.

4. The positive electrode sheet according to any one of claims 1-3, wherein the positive electrode current collector further comprises an uncoated area, the single-sided coated area has one side connected to the double-sided coated area, and has the other side connected to the uncoated area, and the uncoated area has a length of 35 ± 2 mm.

5. The positive electrode sheet according to any one of claims 1-4, wherein in the single-sided coated area, a thickness of the first positive electrode active material layer in the first coating layer is 5-15 µm, a thickness of the second positive electrode active material layer in the first coating layer is 55-75 µm, and a sum of the thickness of the first positive electrode active material layer and the thickness of the second positive electrode active material layer is 60-80 µm.

6. The positive electrode sheet according to any one of claims 1-5, wherein in the double-sided coated area, a thickness of the first positive electrode active material layer in the second coating layer is 5-15 µm, a thickness of the second positive electrode active material layer in the second coating layer is 55-75 µm, and a sum of the thickness of the first positive electrode active material layer and the thickness of the second positive electrode active material layer is 60-80 µm.

7. The positive electrode sheet according to any one of claims 1-6, wherein in the double-sided coated area, a thickness of the first positive electrode active material layer in the third coating layer is 60-80 µm.

8. The positive electrode sheet according to any one of claims 1-7, wherein in the double-sided coated area, a thickness of the first positive electrode active material layer in the fourth coating layer is 5-15 µm, a thickness of the second positive electrode active material layer in the fourth coating layer is 55-75 µm, and a sum of the thickness of the first positive electrode active material layer and the thickness of the second positive electrode active material layer is 60-80 µm.

9. The positive electrode sheet according to any one of claims 1-8, wherein the first positive electrode active material layer further comprises a first conductive agent and a first binder,
mass percentages of components each in the first positive electrode active material layer are:
70-99 wt% of the first positive electrode active material, 0.5-15 wt% of the first conductive agent, and 0.5-15 wt% of the first binder; wherein the first positive electrode active material has a particle size distribution of 5 µm<D₁₀< µm, 16 µm<D₅₀<19 µm, 35 µm<D₉₀<45 µm.

10. The positive electrode sheet according to claim 9, wherein the mass percentages of the components each in the first positive electrode active material layer are:
80-98 wt% of the first positive electrode active material, 1-10 wt% of the first conductive agent, and 1-10 wt% of the first binder.

11. The positive electrode sheet according to any one of claims 1-10, wherein the second positive electrode active material layer further comprises a second conductive agent and a second binder;
mass percentages of components each in the second positive electrode active material layer are:
70-99 wt% of the second positive electrode active material, 0.5-15 wt% of the second conductive agent, and 0.5-15 wt% of the second binder; wherein the second positive electrode active material has a particle size distribution of 4 µm<D₁₀<6 µm, 13 µm<D₃₀<16µm, 22 µm<D₉₀<33 µm.

12. The positive electrode sheet according to claim 11, wherein the mass percentages of the components each in the second positive electrode active material layer are:
80-98 wt% of the second positive electrode active material, 1-10 wt% of the second conductive agent, and 1-10 wt% of the second binder.

13. A lithium-ion battery comprising the positive electrode sheet of any one of claims 1-12.
